(19)

**Europäisches Patentamt**
**European Patent Office**
**Office européen des brevets**

(11) **EP 3 229 048 A1**

(12) **EUROPEAN PATENT APPLICATION**

(43) Date of publication:
**11.10.2017  Bulletin 2017/41**

(51) Int Cl.:
***G02B 5/12*** *(2006.01)*     ***G06K 9/20*** *(2006.01)*

(21) Application number: **16163861.4**

(22) Date of filing: **05.04.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **3M Innovative Properties Company
St. Paul, MN 55133-3427 (US)**

(72) Inventors:
• **KIRCHMEYER, Domenica
  41751 Viersen (DE)**

• **TACKE, Lothar
  41468 Neuss (DE)**
• **HANSEN, Katja
  40219 Düsseldorf (DE)**
• **GELDMACHER, Andreas Martin
  41539 Dormagen (DE)**
• **LIERSE, Markus Gunther Wilfried
  41517 Grevenbroich (DE)**
• **BIALLUCH, Robert
  47877 Willich (DE)**

(74) Representative: **Bergen, Katja
  3M Deutschland GmbH
  OIPC
  Carl-Schurz-Strasse 1
  41453 Neuss (DE)**

(54)   **INFRARED-DETECTABLE RETROREFLECTIVE ARTICLE**

(57)    Retroreflective articles combining both visible images and infrared detectable, machine-readable indicia are described. The visible image and the infrared detectable, machine-readable indicia may overlap. The visible images are formed with materials that are highly transparent to infrared light and reflect at least a portion of the visible spectrum. An IR-blocking material is applied, covering at least a portion of the visible image. The IR-bloching material reflects IR-light yet remains highly transparent to visible light.

*FIG. 1*

**Description**

FIELD

The present disclosure relates to retroreflective articles combining both visible images and infrared detectable, machine-readable indicia. Materials that are highly transparent to infrared light and reflect at least a portion of the visible spectrum are used to form the visible image. An IR-blocking material is applied, and may cover a portion or all of the visible image. The IR-blocking material reflects IR-light yet remains highly transparent to visible light. The difference in retroreflection between areas covered and uncovered by the IR-blocking material form machine-readable indicia such as barcodes.

SUMMARY

Briefly, in one aspect, the present disclosure provides a retroreflective article comprising a retroreflective layer; a first material covering a first region of the retroreflective surface, wherein the first material has a high transmittance in the infrared spectrum and reflects visible light in at least some portion of the visible spectrum forming a human-detectable image; and a second material covering a second region of the retroreflective surface, wherein the second material has a high reflectance in the infrared spectrum and a high transmittance in the visible spectrum; wherein the second region forms machine-readable indicia. In some embodiments, at least a portion of the second material overlaps at least a portion of the first material.

In some embodiments, the first material transmits at least 60% of infrared light having a wavelength of 750 to 100 nanometers. In some embodiments, the second material reflects at least 60% of infrared light having a wavelength of 750 to 100 nanometers, and transmits at least 60% of visible light having a wavelength of 390 to 700 nm.

In some embodiments, the first material comprises infrared light transparent, visible-light visible ink. In some embodiments, the ink is selected from the group consisting of cyan, magenta and yellow ink. In some embodiments, the first material forms human-readable indicia.

In some embodiments, the second material comprises a multilayer film. In some embodiments, the machine readable indicia comprise a barcode.

The details of one or more embodiments of the invention are also set forth in the description below. Other features, objects, and advantages of the invention will be apparent from the description and from the claims.

BRIEF DESCRIPTION OF THE DRAWINGS

**FIG. 1** illustrates a side view of an article according to some embodiments of the present disclosure.

**FIG. 2** illustrates a top view of the exemplary article of **FIG.1** when viewed under visible light.

**FIG. 3** illustrates a top view of the exemplary article of **FIG.1** when viewed under infrared light.

DETAILED DESCRIPTION

Retroreflective sheeting with visible printed indicia thereon, such as the ubiquitous traffic control "STOP" sign, are known. It is also known from U.S. Patent No. 6,024,455 (O'Neill et al.) to create retroreflective articles with concealed retroreflective patterns.

In many applications, it is desirable to combine human-detectable images with machine-readable indicia. "Human-detectable" means visible with the unaided human eye under ambient light conditions. Although it is possible to make the same information machine-readable, it is often desirable to provide different information, or the same information in a different form for machine detection. For example, it may be more efficient to provide the machine-readable information in the form of codes, e.g., barcodes including 2D and 3D barcodes.

In practice, this can be done by combining human-detectable images with machine-readable information on separate articles, or spaced apart on the same article. However, to minimize space or avoid confusion, it may preferable to overlap the two forms of information. In addition, in some embodiments, it may be desirable to conceal the machine-readable information.

Generally, the articles of the present disclosure combine human-readable images with infrared, retroreflected, machine-readable indicia. As used herein, "indicia" are a subset of "images," where indicia refers to a pattern that conveys information as opposed to a random or merely decorative patterns. Indicia may include, but are not limited to, alphanumeric characters, symbols, and codes, e.g., barcodes. In some embodiments, the use of barcodes are preferred.

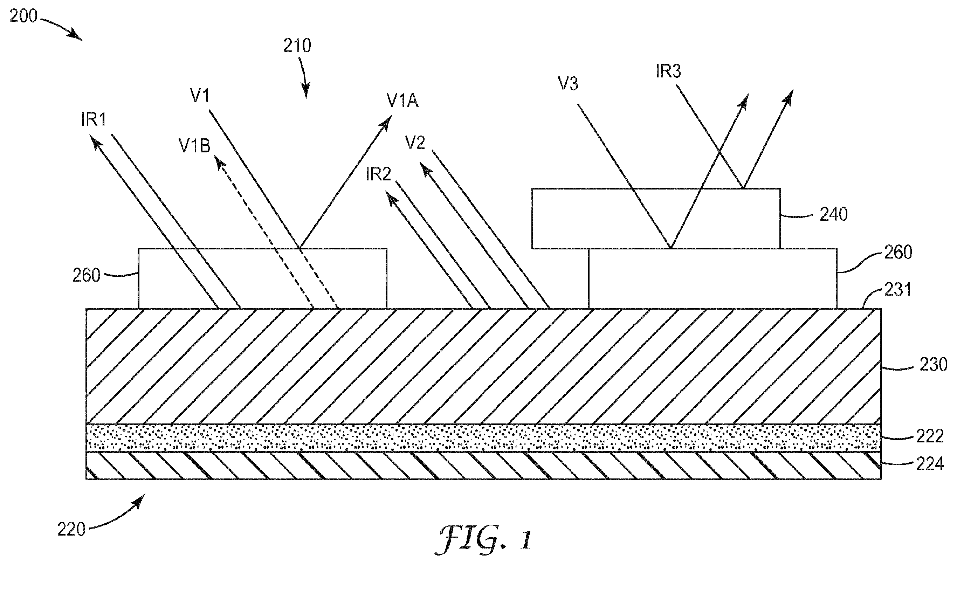

One exemplary embodiment of the articles of the present disclosure is shown in **FIG. 1.** Article **200** includes viewing surface **210** and back surface **220.** Generally, the article is intended to be viewed at some angle incident to viewing surface **210,** while back surface **220** may include various optional features such as adhesive layer **222** suitable for attaching article **200** to a desired surface or substrate. That is, one side (designated the viewing surface) is generally adapted to both receive incident light from a source and emit reflected or retroreflected light toward a detector

(such as the eye of an observer or a camera), and the other side (designated the back surface) may be generally adapted for application to an object.

In the description below, with respect to any layer or element, "top surface" refers to the surface of that layer or element that is closer to viewing surface 210.

Similarly, "bottom surface" refers to the surface of that layer or element that is closer to back surface 220. Therefore, top surface and bottom surface do not refer to any particular spatial orientation of the article, but rather refer to positions relative to the viewing and back surfaces of article 200.

Retroreflective layer 230 may comprise any known retroreflective substrate. Retroreflective layer 230 retroreflects infrared and visible light.

As used herein, "retroreflective" refers to the attribute of reflecting an obliquely incident light ray in a direction antiparallel to its incident direction, or nearly so, such that it returns to the light source or the immediate vicinity thereof. As used herein, "reflect" and "reflective" refer to any combination of specular and diffuse reflection, but exclude retroreflection.

Exemplary retroreflective layers include microsphere-based sheeting and microstructured-based sheeting (e.g., cube corner sheeting). Microsphere-based sheeting, sometimes called "beaded" sheeting, employs a multitude of microspheres typically at least partially imbedded in a binder layer and having associated specular or diffuse reflecting materials (e.g., pigment particles, metal flakes, vapor coats) to retroreflect incident light. Microstructured-based sheeting comprises a body portion typically having a substantially planar front surface and a structured rear surface comprising a plurality of microstructured elements. For example, cube corner retroreflective sheeting comprises a plurality of cube corner elements with each cube corner element comprises three approximately mutually perpendicular optical faces.

A variety of retroreflective substrates suitable for use in the articles of the present disclosure are commercially available. Exemplary microsphere based sheetings include those available under the tradenames 3M SCOTCHLITE 9920 Silver Industrial Wash Fabric and 3M PRECLEAR REFLECTIVE LICENSE PLATE SHEETING Series 4790 from 3M Company, St. Paul, Minnesota, U.S.A. Exemplary microstructure based sheetings include those available under the tradenames 3M DG3 DIAMOND GRADE Reflective sheeting and 3M ADVANCED ENGINEER GRADE Prismatic Sheeting from 3M Company.

Visible image 260 is positioned over top surface 231 of retroreflective layer 230. In some embodiments, visible image 260 is bonded directly to top surface 231. However, in some embodiments, an intermediate layer, e.g., a primer layer or protective layer may be interposed between visible image 260 and top surface 231. If present, such intermediate layers should be selected so as not to interfere with the desired optical performance of the article. For example, such intermediate layers may substantially transparent to both visible and infrared light

Visible image 260 is formed of some material that reflects (i.e., some combination of diffuse and specular reflection) at least some range of the visible light spectrum (390 to 700 nanometers) such that visible image 260 is human-detectable. These human-detectable images may include decorative features (e.g., patterns). These human-detectable images may include indicia such as alphanumeric characters, symbols, and codes.

The material forming visible image 260 has high transmittance in the infrared (IR) spectrum of the desired IR-source and IR detector. As used herein, "high transmittance" means a transmission of greater than 60%, and preferably greater than about 80%, over at least about 75% of the desired IR wavelength range.

Commercially available IR sources include those operating at around 780 nm, around 850 nm, and around 930 nm. Other sources may also be used. In some embodiments, the IR-blocking material will reject light over at least about 75%, e.g., at least 90% of the wavelength spectrum of 750 to 1100 nm, e.g., 750 to 1000 nm, or even 800 to 1000 nm.

Suitable infrared light sources are readily available. Generally, these light sources include an array of infrared LEDs. Common LED wavelengths include 780 nm, 850 nm, and 930 nm. Although sources with higher wavelengths (e.g., above 1000 nm) are available, the associated systems (sources and detectors) become expensive. For wavelengths below 750 nm, the human eye begins to be able to detect the image, making such sources less suitable for many applications. Exemplary IR light sources include those available in the VTR Series (e.g., VTR2, VTR4, and VTR6, believed to operate at 850 nm) from GARDASOFT VISION LTD.

Suitable infrared detectors are also readily available, and may be selected in combination with the IR light source to ensure compatibility. Cameras, e.g., video cameras, form the basic element of many detectors. Such detectors may include a Complimentary Metal-Oxide Sensor (CMOS). Exemplary detectors include GRASSHOPPER 3 from Point Grey Research Incorporated.

In some embodiments, visible image 260 may be formed using a variety of commercial available inks. For example, common process color inks (i.e., cyan, magenta and yellow inks) may be used alone or in combination to form a vast arrays of visible colors, while still providing high transmittance of IR light. Also, there are a variety of commercial sources offering IR-transparent black inks, including, e.g., NAZDAR Ink Technologies, Shawnee, Kansas, U.S.A., and Infrared Coatings, Mammoth Spring, Arkansas, U.S.A.

Infrared ("IR") imaging material 240 is positioned over top surface 231 of retroreflective layer 230 and covering some or all of visible image 260. Generally, **IR**-imaging material 240 acts as a filter selectively reflecting IR-light at least in a wavelength range of the IR-illumination source and IR-detector. Like a filter, IR-imaging material 240 also selectively allows the transmission of visible light.

Generally, IR-imaging material 240 has high reflectance in the infrared (IR) spectrum of the desired IR-source and IR detector. As used herein, "high reflectance" means any combination of diffuse and specular reflectance resulting in a reflectance of at least 60%, e.g., at least 80%, over at least about 75%, e.g., at least 90% of the desired IR wavelength range. IR-imaging material **240** has high transmission throughout most of the visible spectrum. By "high transmission throughout most of the visible spectrum" we mean a transmission of greater than 60%, e.g., greater than about 80%, over at least 75%, e.g., at least 90%, of the spectral range from 390 to 700 nm.

IR-imaging material **240** is positioned over selected portions of top surface **231** of retroreflective layer **230** to form machine-readable indicia. In some embodiments, the machine-readable indicia include barcodes.

Referring to **FIG. 1,** the effects of the various elements of article **200** on visible light are shown through arrows **V1, V2,** and **V3.** Similarly, the effects of the various elements of article **200** on IR light are shown through arrows IR1, **IR2,** and **IR3.**

As shown by arrow **V2,** some visible light incident on viewing surface **210** of article **200** will not encounter **IR**-imaging material **240** or visible image **260.** Such visible light may be retroreflected by retroreflective layer 230. Similarly, as shown by arrow **IR2,** some IR light incident on viewing surface **210** of article **200** will not encounter IR-imaging material **240** or visible image **260,** and will be retroreflected by retroreflective layer **230.**

As shown by arrow **V1,** some visible light incident on viewing surface **210** of article 200 will encounter visible image **260.** As shown by arrow **V1A,** at least some visible light is reflected (specular and or diffuse reflection) by visible image **260.** In some embodiments, visible image **260** may be transparent to some wavelengths of visible light. As shown by arrow **V1B,** such wavelengths may be retroreflected by retroreflective layer **230.** Although not shown, some wavelengths of visible light may also be absorbed by visible image **260.** As a result of these various interactions, a human-detectable image is formed.

Some visible light incident on viewing surface **210** of article **200** will encounter both IR-imaging material **240** and visible image **260.** As shown by arrow **V3,** such visible light is substantially unaffected by the presence of IR-imaging material **240,** which is highly transparent to visible light. Such visible light then encounters visible image **260** and may be absorbed, transmitted, or reflected as described above, contributing to the human-detectable image.

Some IR light incident on viewing surface **210** of article **200** will encounter visible image **260.** As shown by arrow **IR1,** such IR light is substantially unaffected by the presence of visible image **260,** which is highly transparent to IR light. Such IR light is then retroreflected by retroreflective layer **230.**

Finally, some IR light incident on viewing surface **210** of article **200** will encounter IR-imaging material **240.** As shown by arrow **IR3,** such IR light is reflected (specular and or diffuse reflection) by IR-imaging material **240.** Generally, the interaction between IR light incident on IR-imaging material **240** is unaffected by the presence or absence of visible image **260** between IR-imaging material **240** and the retroreflective layer.

Generally, machine-readable indicia are formed by the contrast between the intensity of infrared light retroreflected from areas of retroreflective layer **230** uncovered by IR-imaging material **240,** as compared to the intensity of infrared light retroreflected from areas of retroreflective layer **230** covered by IR-imaging material **240.** In some embodiments, the intensity of infrared light retroreflected from areas of retroreflective layer **230** covered by IR-imaging material **240** will be close to that predicted for diffuse reflection.

In some embodiments, the machine-readable indicia will not be visible under visible light or detectable under such conditions with the unaided human eye. However, in some embodiments, some wavelengths of visible light may be affected (absorbed or reflected) by IR-imaging material **240,** at least at certain viewing angles. For example, in some embodiments, IR-imaging material **240** may appear as a cyan or magenta image when viewed from different angles. This may be a desirable feature, e.g., for security or authentication, in some applications.

In some embodiments, IR-imaging material **240** comprises a multilayer polymeric film, e.g., a multilayer polymeric film having a percent reflectance and transmission which are substantially complementary (i.e., absorption is preferably low or negligible) for wavelengths of interest, and which are functions of the refractive indices and thicknesses of the constituent polymeric layers, as well as of the orientation and polarization of incident light.

Generally, the reflectance and transmission spectra of a particular multilayer film used to form IR-imaging material **240** primarily depends on the optical thickness of the individual layers along the various axes, and is substantially determined by the well-known Fresnel coefficients. Films can be designed to reflect infrared, visible, or ultraviolet light by choice of the appropriate optical thicknesses of the layers in accordance with the following formula:

$$\lambda_M = (2/M) \bullet D_r \quad (I)$$

where M is an integer representing the particular order of the reflected light and $D_r$ is the optical thickness of an optical repeating unit ("ORU"). Accordingly, $D_r$ is the sum of the optical thicknesses of the individual layers that make up the ORU. By arranging the ORUs along the thickness of the multilayer film in a series such that the optical thicknesses of the ORUs conform to a give profile, a multilayer film can be designed that reflects light over a broad reflection band.

A reflecting multilayer film having the properties described herein can be made by employing a multilayer coextrusion device as described in U.S. Pat. Nos. 3,773,882 (Schrenk) and 3,884,606 (Schrenk). Such a device provides a method for preparing multilayered, simultaneously extruded thermoplastic materials, each layer of which has a substantially uniform layer thickness. Optionally, this multilayered stream can be subsequently passed through a series of layer multiplying means, such as described in U.S. Pat. Nos. 3,759,647 (Schrenk et al.), 5,094,788 (Schrenk et al.), or 5,094,793 (Schrenk et al.), in order to further increase the number of layers in the final film. The multilayered stream is then passed into an extrusion die which is so constructed and arranged (see, e.g., U.S. Pat. No. 3,557,265 (Chisholm et al.)) that streamlined flow is maintained therein. The resultant product is extruded to form a multilayered film in which each layer is generally parallel to the major surface of adjacent layers. In the case of mirrors and reflective polarizers, the number of layers is preferably less than about 10,000, more preferably less than about 5,000, and (even more preferably) less than about 2,000.

The desired relationship between refractive indices of polymeric layers can be achieved by selection of appropriate materials and appropriate processing conditions. In the case of organic polymers which can be oriented by stretching, the multilayer films are generally prepared by coextruding the individual polymers to form a multilayer film (as set forth above) and then "orienting" the reflective film body by stretching at a selected temperature, optionally followed by heat-setting at a selected temperature. Alternatively, the extrusion and orientation steps can be performed simultaneously. By the orientation, the desired extent of birefringence (positive or negative) is set in those polymeric layers that comprise a polymer that can exhibit birefringence. In the case of mirrors, the film can be stretched substantially in two directions (biaxial orientation) to produce a mirror film where any given individual layer has substantially the same in-plane refractive indices and at least some of such layers have an out-of-plane refractive index different from the in-plane indices (and therefore are birefringent). The mirror film body can be allowed to dimensionally relax in the cross-stretch direction from the natural reduction in cross-stretch (equal to the square root of the stretch ratio) to being constrained (i.e., no substantial change in cross-stretch dimensions). The film body can be stretched in the machine direction, as with a length orienter, and/or in width using a tenter. The pre-stretch temperature, stretch rate, stretch ratio, heat set temperature, heat set time, heat set relaxation, and cross-stretch relaxation are selected to yield a multilayer film having the desired refractive index relationship. These variables are interdependent: thus, for example, a relatively low stretch rate could be used if coupled with, e.g., a relatively low stretch temperature. It will be apparent to one of ordinary skill how to select the appropriate combination of these variables to achieve the desired multilayer device. In general, however, a stretch ratio in the range from about 1:2 to about 1:10 (more preferably about 1:3 to about 1:7) in the stretch direction and from about 1:0.2 to about 1:10 (more preferably from about 1:0.2 to about 1:7) orthogonal to the stretch direction is preferred.

Orientation of the extruded film can be done by stretching individual sheets of the material in heated air. For economical production, stretching can be accomplished on a continuous basis in a standard length orienter, tenter oven, or both. Economies of scale and line speeds of standard polymer film production can be achieved thereby achieving manufacturing costs that are substantially lower than costs associated with commercially available absorptive polarizers. Lamination of two or more multi-layer films can also be practiced to obtain a mirror film. Amorphous copolyesters are useful as laminating materials, with VITEL Brand 3000 and 3300 from the Goodyear Tire and Rubber Co. of Akron, Ohio, noted as materials that have been tried. The choice of laminating material is broad, with adhesion to the multi-layer films, optical clarity and exclusion of air being the primary guiding principles. It may be desirable to add to one or more of the layers, one or more inorganic or organic adjuvants such as an antioxidant, extrusion aid, heat stabilizer, ultraviolet ray absorber, nucleator, surface projection forming agent, and the like in normal quantities so long as the addition does not substantially interfere with the desired performance.

One class of polymeric materials incorporated into the multilayer film preferably produce birefringent polymeric layers. These materials are characterized in that stretching in a given direction substantially alters one or more of its refractive indices, and a particularly preferred layer is one containing a crystalline or semi-crystalline polyethylene naphthalate (PEN) inclusive the isomers (e.g. 2,6-; 1,4-; 1,5-; 2,7; and 2,3-PEN). Another class of polymeric materials incorporated into the multilayer film preferably produce substantially isotropic polymeric layers. These materials are characterized in that stretching in a given direction has little or no effect on its refractive indices, and a particularly preferred layer is one containing a layer containing a polymethylmethacrylate and in particular polymethylmethacrylate itself.

Other materials suitable for use in constructing IR-imaging material are described in, e.g., U.S. 6,024,455 (O'Neill et al.) at column 13, line 15 through column 20, line 18.

If provided as a film, the IR-imaging material may processed (e.g., cut) in the form of the desired indicia. Suitable indicia include, e.g., alphanumeric characters, symbols, and codes such as 2D and 3D barcodes. In some embodiments, the IR-imaging material may be bonded directly to retroreflective layer **230,** and optionally to visible image **260.** In some embodiments, one or more intervening layers, e.g., primers and adhesives, may be positioned between the IR-imaging material and the retroreflective layer. Such materials, if present, should be selected to have optical properties that will not interfere with the optical performance of the final article. For example, materials highly transparent in both the visible and IR spectrums may be suitable.

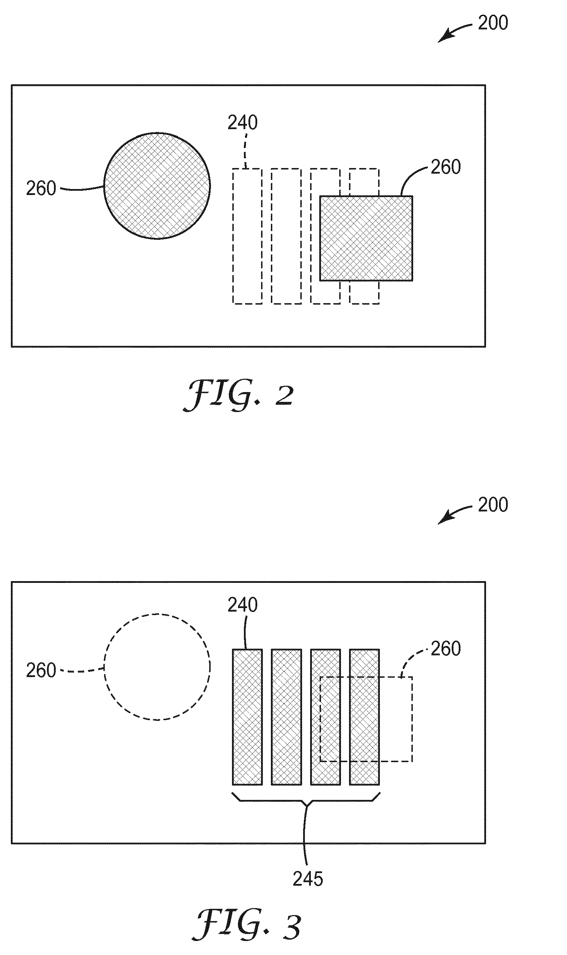

Referring to **FIG. 2,** through the combination of IR-light reflecting and visible-light transmitting properties, some or all of IR-imaging material **240** may be positioned over visible image **260.** When viewed under visible light, visible image **260** is detectable by the unaided human eye, while IR-imaging material **240** is substantially or completely undetectable by the unaided human eye. IR-imaging material **240** is shown in dashed line to indicate its presence over visible image **260.**

Referring to **FIG. 3,** when viewed under IR illumination, retroreflected indicia **245** formed by the patterned application of IR-imaging material **240** over the retroreflective substrate is detectable, e.g., with an appropriate IR-detector (e.g., a camera). Visible image **260** is shown in dashed lines to indicate its presence below IR-imaging material **240;** however visible image **260** does not prevent the detection of retroreflected indicia **245.**

As shown, in **FIG. 1,** in some embodiments, article **200** may include optional adhesive layer **222.** Generally, any known adhesive may be used, including, e.g., pressure sensitive adhesives. In some embodiments, the adhesive may be protected by release liner **224,** which protects the adhesive during handling and is removed prior to adhering article **200** to an object.

Although not shown, other optional layers may be included in various embodiments of the present disclosure. For example, overlaminating films or coatings (e.g., UV protecting layers or clear coats) may be applied to protect article **200.** However, the selection of such materials should be controlled to avoid substantially interference with the optical performance of the resulting article.

Example. An exemplary retroreflective article according to some embodiments of the present disclosure was prepared.

3M Engineer Grade Prismatic Reflective Sheeting Series 3400 (available from 3M (TM) Company, St. Paul, Minnesota, U.S.) was used as the retroreflective layer. This is a non-metalized microprismatic lens retroreflective sheeting which includes a pressure sensitive adhesive and release liner. A visible image was printed on the retroreflective sheeting using Piezo Inkjet Ink Series 8800UV inks from 3M Company. The visible image was inkjet printed using 8812UV red ink, 8814UV yellow ink, and 8816UV cyan ink.

3M (TM) Sun Control Film Prestige 90 Exterior window film was used as the IR-blocking material. This film is a multilayer, metal free film with high visual light transmittance and rejecting about 97% of IR light. It includes an adhesive layer and release liner. The IR-blocking material was cut into the shape of a two-dimensional square barcode. The release liner was removed and the shaped IR-blocking material was adhered to the surface of the retroreflective film, covering at a portion of the printed visible image.

When observing the resulting article in ambient light, the visible image was clearly visible to the unaided human eye, even in the regions covered by the IR-blocking material. Depending on the viewing angle, the IR-blocking material was also visible in ambient light as a transparent, faintly colored film ranging from yellow, to cyan, to magenta depending on the angle.

When exposed to IR light from an LED array at wavelength 850 nm and observed using an industrial CMOS camera without IR filter, the IR blocking material appeared as black-on-white against the retroreflective background. A machine-readable code pattern was formed by the IR-blocking material.

Various modifications and alterations of this invention will become apparent to those skilled in the art without departing from the scope and spirit of this invention.

**Claims**

1. A retroreflective article comprising:

   a retroreflective layer;
   a first material covering a first region of the retroreflective surface, wherein the first material has a high transmittance in the infrared spectrum and reflects visible light in at least some portion of the visible spectrum forming a human-detectable image; and
   a second material covering a second region of the retroreflective surface, wherein the second material has a high reflectance in the infrared spectrum and a high transmittance in the visible spectrum; wherein the second region forms machine-readable indicia.

2. The retroreflective article of claim 1, wherein the first material transmits at least 60% of infrared light having a wavelength of 750 to 1000 nanometers.

3. The retroreflective article of claim 1 or 2, wherein the second material reflects at least 60% of infrared light having a wavelength of 750 to 1000 nanometers, and transmits at least 60% of visible light having a wavelength of 390 to 700 nm.

4. The retroreflective article of any one of the preceding claims, wherein at least a portion of the second material overlaps at least a portion of the first material.

5. The retroreflective article of any one of the preceding claims, wherein the first material comprises infrared light transparent, visible-light visible ink.

6. The retroreflective article of claim 5, wherein the ink is selected from the group consisting of cyan, magenta and yellow ink.

7. The retroreflective article of any one of the preceding claims, wherein the first material forms human-readable indicia.

8. The retroreflective article of any one of the preceding claims, wherein the second material comprises a multilayer film.

9. The retroreflective article of any one of the preceding claims, wherein the machine readable indicia comprise a barcode.

*FIG. 1*

EP 3 229 048 A1

*FIG. 2*

*FIG. 3*

Europäisches
Patentamt

European
Patent Office

Office européen
des brevets

# EUROPEAN SEARCH REPORT

Application Number

EP 16 16 3861

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/148426 A1 (3M INNOVATIVE PROPERTIES CO [US]) 1 October 2015 (2015-10-01) * page 1, line 10 - page 9, line 34 * * page 20, line 8 - page 21, line 29; figures 2, 3 * | 1-9 | INV. G02B5/12 G06K9/20 |
| X | WO 2013/149142 A1 (3M INNOVATIVE PROPERTIES CO [US]; FLEMING PATRICK R [US]; DAHLIN THOMA) 3 October 2013 (2013-10-03) * paragraphs [0008] - [0078]; figures 1-12 * | 1-7,9 | |
| X | EP 1 246 118 A1 (PIPS TECHNOLOGY INC [US]) 2 October 2002 (2002-10-02) * the whole document * | 1,9 | |

TECHNICAL FIELDS
SEARCHED    (IPC)

G02B
G06K

The present search report has been drawn up for all claims

| Place of search | Date of completion of the search | Examiner |
|---|---|---|
| Munich | 12 October 2016 | Wolf, Steffen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 16 3861

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2016

| Patent document cited in search report | | | Publication date | Patent family member(s) | | Publication date |
|---|---|---|---|---|---|---|
| WO 2015148426 | A1 | | 01-10-2015 | TW 201541371 A<br>WO 2015148426 A1 | | 01-11-2015<br>01-10-2015 |
| WO 2013149142 | A1 | | 03-10-2013 | CA 2868831 A1<br>CN 104584035 A<br>EP 2831815 A1<br>JP 2015515063 A<br>US 2015060551 A1<br>WO 2013149142 A1 | | 03-10-2013<br>29-04-2015<br>04-02-2015<br>21-05-2015<br>05-03-2015<br>03-10-2013 |
| EP 1246118 | A1 | | 02-10-2002 | EP 1246118 A1<br>US 2002134835 A1 | | 02-10-2002<br>26-09-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6024455 A, O'Neill
- US 3773882 A, Schrenk
- US 3884606 A, Schrenk
- US 3759647 A, Schrenk
- US 5094788 A, Schrenk
- US 5094793 A, Schrenk
- US 3557265 A, Chisholm
- US 6024455 O, O'Neill